# EUROPÄISCHE PATENTSCHRIFT

(11) **EP 1 054 191 B1**
(45) Veröffentlichungstag und Bekanntmachung des Hinweises auf die Patenterteilung: **30.07.2003**
(21) Anmeldenummer: 00109710.4
(22) Anmeldetag: 08.05.2000
(51) Int. Cl.: B60K 31/00, F16H 59/14, F16H 59/70

(54) **Modellbasiertes Erkennen der Neutralposition eines Schaltgetriebes**
Recognizing of the neutral position of a manual gearbox based on a state observer
Reconnaissance de la position Neutre d'une boite de vitesse manuelle basée sur une fonction transfer

(30) Priorität: 10.05.1999 DE 19921384
(43) Veröffentlichungstag der Anmeldung: 22.11.2000
(73) Patentinhaber: Continental Teves AG & Co. oHG, 60488 Frankfurt (DE)
(72) Erfinder: Diebold, Jürgen, 65760 Eschborn (DE)

(56) Entgegenhaltungen:
- EP-A- 0 299 235
- WO-A-90/13452
- DE-A- 19 739 133
- DE-A- 19 802 217
- US-A- 5 758 306

## Beschreibung

Die vorliegende Erfindung betrifft ein Verfahren und eine Vorrichtung zum Ermitteln des Fahrzeugschaltgetriebe-Zustandes bei einem Fahrzeug gemäß dem Oberbegriff des Anspruchs 1.

Beim Fahren eines Fahrzeugs allgemein ändern sich die Motorbetriebsbedingungen unter anderem dahingehend, daß der Motor übergeht vom Normalbetrieb (belasteter Lauf), indem der Motor das Fahrzeug antreibt, so daß die Motorausgangsleistung größtenteils und insbesondere definiert zum Antreiben des Fahrzeugs verwendet wird, hin zu einem Leerlaufverhalten (in dieser Anmeldung bedeutet Leerlauf nicht unbedingt die Leerlaufdrehzahl des Motors, aber immer den Lauf des Motors ohne Fahrzeug als Last). Der Übergangszustand wird bei Schaltgetrieben mit der Kupplung gesteuert. Bei eingeschalteter Abstands- und/oder Geschwindigkeitsregelanlage führt ein Fahrzeugbetriebszustand, bei dem der Motor ohne Fahrzeug als Last läuft, d.h. bei dem das Motormoment nicht auf die Antriebsachse oder die Antriebsachsen übertragen wird, da das Schaltgetriebe in den Leerlauf geschaltet ist und die Kupplung vom Fahrer nicht betätigt wird, zu einem Hochdrehen des Motors. In diesen Fällen kann es neben Komfortbeeinträchtigungen durch den ggf. hoch drehenden Motor auch zu Beeinträchtigungen im Fahrverhalten durch den Fahrer kommen, wenn dieser in einer kritischen Fahrsituation durch das Hochdrehen des Motors im Leerlauf irritiert wird. Darüber hinaus sind Beschädigungen des Antriebs nicht ausgeschlossen.

Aus der DE 198 02 217 A1 ist ein Verfahren und eine Vorrichtung bekannt, mittels denen während des Übergangs vom Leerlauf zum Normalbetrieb, das für den eigentlichen Fahrzeugbetrieb zur Verfügung stehende Drehmoment bestimmt wird, welches bei Anfahrhilfen am Berg genutzt werden soll.

Der Erfindung liegt die Aufgabe zugrunde, ein Verfahren und eine Vorrichtung zum Ermitteln des Fahrzeugschaltgetriebezustandes bei Fahrzeugen, die mit einer Abstands- und/oder Geschwindigkeitsregelanlage ausgerüstet sind, anzugeben.

Diese Aufgabe wird durch die Merkmale der Ansprüche 1 und 13 gelöst.

Zunehmend werden Abstands- und/oder Geschwindigkeitsregelanlagen auch in Fahrzeugklassen eingesetzt, die ein Schaltgetriebe aufweisen und bei denen es im Gegensatz zu Fahrzeugen mit Automatikgetriebe daher keinerlei Informationen über die eingelegten Fahrstufen gibt. Bei Fehlbedienungen durch den Fahrer, wie sie insbesondere in kritischen Fahrsituationen vorkommen, wenn also der Fahrer bei eingeschalteter ACC- (Adaptive Cruise Control) oder CC-(Cruise Control) Anlage die Motorbetriebsbedingungen dahingehend ändert, daß er von einem Normalbetrieb (belasteter Lauf) hin zu einem Leerlaufverhalten des Motors ohne Betätigung der Kupplung schaltet, das Fahrzeug also in einen Zustand überführt, in dem kein Gang eingelegt ist und die Kupplung nicht betätigt ist, wird durch das Verfahren nach der Erfindung, die Abstands- und/oder Geschwindigkeitsregelanlage dahingehend überlagert, daß für den Zustand, bei nicht getretener Kupplung und nicht eingelegtem Gang, das Leerlaufverhalten des Motors hin zur MOtorleerlaufdrehzahl beeinflußt wird.

Vorteilhaft wird diese Beeinflussung der Abstands- und/oder Geschwindigkeitsregelanlage über eine Ermittlung des Fahrzeugantriebsmoments erzielt, wie es in der DE 198 02 217 A1 beschrieben ist. Die Verwendung des hier beschriebenen Verfahrens zum Ermitteln des Fahrzeugantriebsmoments bzw. der Vorrichtung zum Ermitteln des Fahrzeugantriebsmoments ermöglicht die Erkennung des Fahrzeugschaltgetriebezustandes bei Fahrzeugen mit Schaltgetrieben über das Motormoment, das auch tatsächlich über die Kupplung an der Antriebsachse zur Verfügung steht.

Der hier vorgesehene Beobachter liefert daher auch einen gegen Null gehenden Wert für das zur Verfügung stehende Antriebsmoment und somit den Hinweis, daß kein Gang eingelegt ist. Damit steht die benötigte Information über den Fahrzeugschaltgetriebezustand über das Fahrzeugantriebsmoment zur Verfügung.

Die in dem Verfahren und der Vorrichtung zum Ermitteln des Fahrzeugantriebsmoments gemessene Motordrehzahl wird vorteilhaft zur Plausibilitätsprüfung herangezogen und so das geschätzte Antriebsmoment mit der zu erwartenden Motordrehzahl verglichen und unplausible Zustände erkannt.

Ein Ausführungsbeispiel der Erfindung ist in der Zeichnung angegeben und wird im folgenden näher beschrieben.

Es zeigen:
- Fig. 1: eine Vorrichtung zur Fahrzeugantriebsmomentbestimmung entsprechend der DE 198 02 217 A1
- Fig. 2: beispielhaft ein Leerlaufmodell, das bei der Fahrzeugantriebsmomentermittlung verwendet werden kann
- Fig. 3: eine Ausführungsform zur Einbindung der Antriebsmomentbestimmung in eine Abstandsregelanlage mit Drosselklappensteuerung.

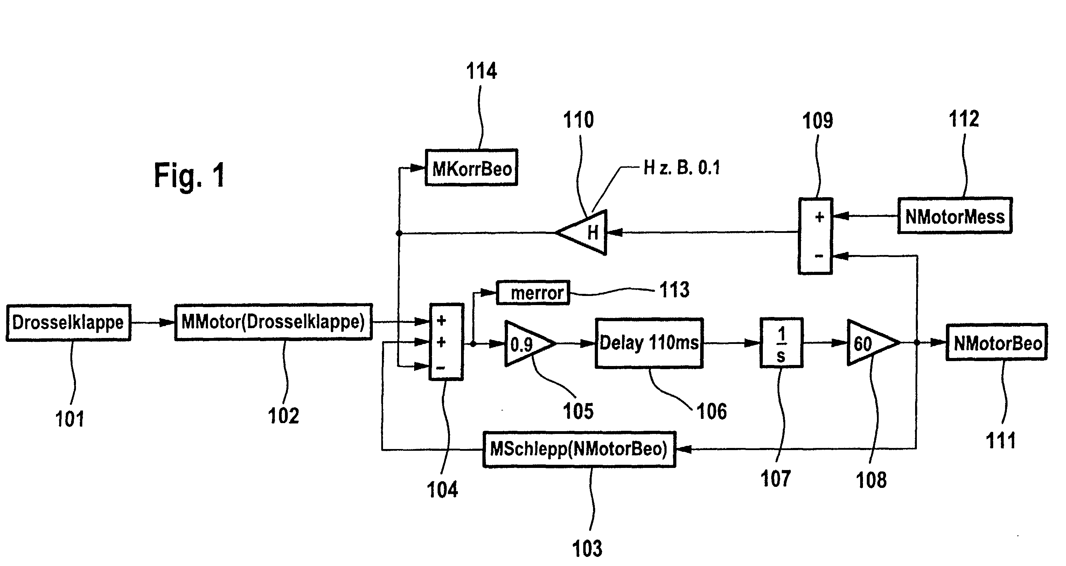

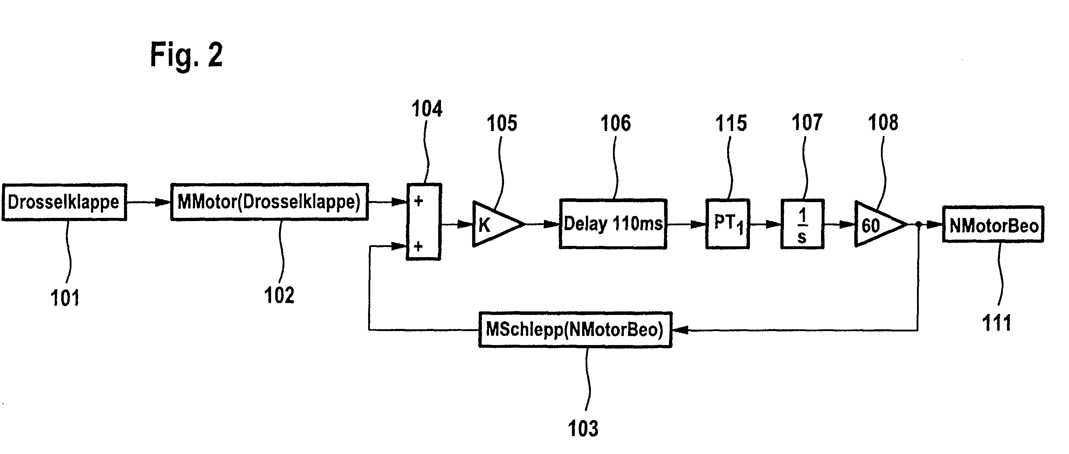

Bevor nachfolgend Bezug nehmend auf Fig. 1 die Antriebsmomentbestimmung zur Ermittlung der Fahrzeugschaltgetriebezustands beschrieben wird, wird Bezug nehmend auf Fig. 2 ein Beispiel eines Leerlaufmodells erläutert. Ein für die Antriebsmomentbestimmung geeignetes Leerlaufmodell muß folgende Forderungen erfüllen:
- Es muß geeignete Eingangs- und Ausgangsgrößen haben, und
- es muß das Leerlaufverhalten des Motors statisch wie dynamisch möglichst genau beschreiben, um für den Übergangszustand brauchbar zu sein.

Das in Fig. 2 gezeigte Leerlaufmodell erfüllt diese Forderungen. Es hat als Eingangsgröße ein Moment und liefert als Ausgangsgröße eine Schätz-Motordrehzahl NMotorBeo. Das Modell berücksichtigt dabei, daß dem eigentlichen, vom Motor abgegebenen Leerlaufmoment das intern im Motor wirkende Reibmoment, auch Schleppmoment genannt, entgegenwirkt. Dieses Gegeneinanderwirken wird im Addierer 104 nachgebildet. Das eigentliche Motorleerlaufmoment MMotor kann beispielsweise nach Ma8gabe der Drosselklappenstellung anhand eines Kennfelds, einer Formel, eines Polygonzugs o.ä. ermittelt werden. Dieses Leerlaufmotormoment MMotor bildet einen Eingang des Addierers 104. Bezugsziffer 101 bezeichnet einen Drosselklappensensor bzw. einen Anschluß, an dem ein entsprechendes Signal vorliegt. Bezugsziffer 102 ist eine erste Ermittlungseinrichtung zum Ermitteln des Leerlaufmotormoments MMotor. Der Addierer 104 liefert an seinem Ausgang den Unterschied zwischen Leerlaufmoment und Schleppmoment. Wenn beide gleich sind und somit der Unterschied Null ist, läuft der Motor mit konstanter Drehzahl.

Die Dynamik des Motors wird durch die Baugruppen 105, 106, 107 und 115 nachgebildet. 106 ist ein Verzögerungsglied, mit dem Totzeiten im Motor nachgebildet werden (beispielsweise die Zeitverzögerung zwischen Verändern des Drosselklappenwinkels und Veränderung der tatsächlich eingespritzten Benzinmenge im Zylinder), Baugruppe 115 ist ein Verzögerungsglied erster oder höherer Ordnung, mit dem allgemein Systemfolgeverzögerungen nachgebildet werden, insbesondere der Zeitverlauf der Verbrennung des Gemischs bis zum Momentenaufbau.

107 ist ein Integrierer, der das Signal an seinem Eingang integriert. Sein Ausgangssignal steigt, wenn sein Eingangssignal positiv ist (also wenn das Motormoment als das Schleppmoment ist), und es sinkt, wenn sein Eingangssignal negativ ist (also wenn das Schleppmoment größer als das Motormoment ist). Befinden sich beide im Gleichgewicht, ist das Eingangssignal am Integrator Null und sein Ausgangssignal konstant.

Die Komponenten 105 und 108 sind Konstanten, mit denen Motorkonstanten berücksichtigt und Umrechnungen vorgenommen werden können. Komponente 105 entspricht dem Motormassenträgheitsmoment und bestimmt somit auch die Dynamik des Motors. Somit ergibt sich eine der Motordrehzahl entsprechende Größe NMotorBeo. Da das weiter oben erwähnte Motorschleppmoment MSchlepp primär von der Motordrehzahl abhängt, kann der Wert NMotorBeo als Eingangsgröße für eine Ermittlungseinrichtung 111 zur Ermittlung des Motorschleppmoments dienen. Die Ermittlungseinrichtung 111 kann ein Kennfeld sein, eine Formel, ein Polygonzug oder ähnliches.

Somit erhält man ein Leerlaufmodell für einen Motor, das als Eingangsgrößen das Gesamtmoment und als Ausgangsgröße die Motordrehzahl hat. Je nach erforderlicher bzw. gewünschter Genauigkeit des Modells sind die zur Nachbildung der Dynamik notwendigen Komponenten vorzusehen, und insbesondere die Komponenten 106 und 115 sind vorteilhaft, aber nicht zwingend notwendig.

Bezugnehmend auf Fig. 1 wird nun eine Ausfhhrungsform beschrieben. Fig. 1 zeigt eine Vorrichtung zum Ermitteln des Fahrzeugantriebsmoments, die auf dem Prinzip eines Beobachters basiert. Der Gedanke dabei ist folgender: Mit dem weiter oben beschriebenen Leerlaufmodell wird die "theoretische" Leerlaufdrehzahl ermittelt. Sie wird mit der gemessenen tatsächlichen Motordrehzahl verglichen. Ein unterschied ergibt sich insbesondere während der eingangs beschriebenen übergangszustände deshalb, weil der Motor nicht ausschließlich im Leerlauf läuft, sondern noch teilweise dem Antrieb des Fahrzeugs dient. Aus dem Vergleich von geschätzter und gemessener Motordrehzahl kann deshalb auf das dem Fahrzeugantrieb dienende Fahrzeugantriebsmoment geschlossen werden.

In Fig. 1 ist im unteren Teil das schon anhand von Fig. 2 beschriebene Leerlaufmodell zu sehen. Die Schätz-Motordrehzahl NMotorBeo 111 wird mit der gemessenen Ist-Motordrehzahl NMotorMess 112 verglichen. Insbesondere wird im Subtraktionsglied 109 die Differenz zwischen beiden gebildet. Nach einer Beobachterverstärkung 110 mit Kalibrierung (wobei unter Kalibrierung in dieser Anmeldung eine proportionale Umrechnung z. B. zum Zwecke der Werteanpassung, Umrechnung oder Normierung verstanden wird) kann dieser Wert als direktes Maß für das Antriebsmoment des Fahrzeugs MKorrBeo 114 verwendet werden.

Darüber hinaus wird dieses Moment, da es tatsächlich nicht zur Beschleunigung des Motors zur Verfügung steht, am Summationspunkt 104 gegengekoppelt, um das Leerlaufmodell wieder stabil zu machen.

Das Verzögerungsglied 106 stellt eine Verzögerung zwischen 50 und 150 ms, vorzugsweise zwischen 100 und 120 ms ein. Bezugsziffer 112 bezeichnet eine Einrichtung zum Ermitteln der Ist-Motordrehzahl NMotorMess. Im einfachsten Fall kann es sich hierbei um einen Sensor handeln, der ein analoges oder digitales-Signal ausgibt. Es können sich daran aber auch komplexere Filterfunktionen anschließen. Schließlich kann es sich bei der Einrichtung 112 auch um die Anzapfung eines Datenbusses handeln, auf dem entsprechende Meßwerte vorhanden sind. Die Kalibrierung 108 kann beispielsweise die Umrechnung von Umdrehungen pro Sekunde auf Umdrehungen pro Minute vornehmen. Demzufolge wäre sie ein Faktor 60. Die Kalibrierungen 105 und 108 dienen auch der Anpassung der Daten an die jeweils notwendigen Normierungen.

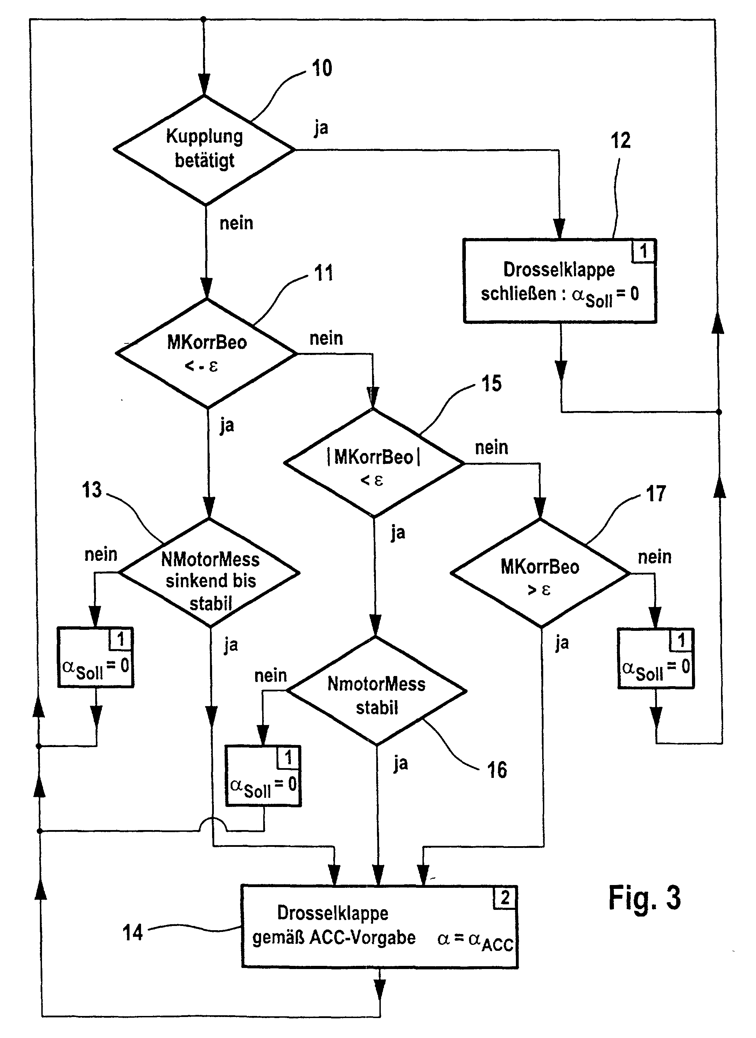

Fig. 3 zeigt eine Drosselklappensteuerung bei einer ACC-Anlage mit Schaltgetriebe, die das ermittelte Antriebsmoment des Fahrzeugs MKorrBeo 114 zur Ermittlung des Fahrzeugschaltgetriebezustandes erhält. Mit dem gezeigten Ablauf können verschiedene Übergangszustände, wie ein Antriebsmoment vom Motor über die Kupplung an die Antriebsachse übertragen werden, unterschieden werden:
MKorrBeo < -ε = Motorschleppbetrieb
|MKorrBeo| < ε = Fahrzeug ohne Last, Leerlaufverhalten
MKorrBeo > ε = Antrieb/Beschleunigung

Logische Verzweigungen sind im Flußdiagramm als Rauten dargestellt.

Ausgehend von einer gegebenen Fahrsituation wird zunächst in Raute 10 festgestellt, ob die Kupplung betätigt wurde oder nicht. Wurde die Kupplung betätigt, wird die Drosselklappe über entsprechende Aktuatoren geschlossen, so daß deren Drosselklappenwinkel α_{Soll} = 0 ist. Ein entsprechendes Drosselklappensignal wird in den Regelkreis zurückgeführt. Es wird eine erneute Betätigung der Kupplung 10 abgefragt.

Wenn der erneute Durchlauf eine andere Situation ermittelt, wenn die Kupplung nicht betätigt wurde, wird der Wert für das Antriebsmoment des Fahrzeugs MKorrBeo 114 in Raute 11 mit einem Schwellenwert ε verglichen. Liegt MKorrBeo unter der Momentenschwelle ε und hat ε ein negatives Vorzeichen, so wird ein Motorschleppbetrieb angenommen. Die Situation in Raute 11 wird in Raute 13 einer Plausibilitätsprüfung unterworfen. Wenn die in Fig. 1 dargestellte und näher beschriebene Ist-Motordrehzahl NMotorMess 112 sinkend bis stabil ist, wird der in Raute 11 festgestellte Motorschleppbetrieb bestätigt und die Drosselklappe gemäß der ACC oder CC-Vorgabe mittels Aktuator 14 so geregelt, daß der Drosselklappenwinkel α = α ACC/CC.(wobei α_{ACC/CC} der Drosselklappenwinkel der ACC- oder CC-Regelung ist).

Ergibt die Plausibilitätsüberprüfung in Raute 13, daß die Ist-Motordrehzahl NMotorMess 112 ansteigend ist, wird ein Fahrzustand ohne eingelegten Gang angenommen und über Aktuator 12 die Drosselklappe geschlossen, so daß α_{Soll} = 0 ist.

Hat der Durchlauf in Raute 11 kein MKorrBeo < - ε ergeben, so wird in Raute 15 die betragsmäßige Größe MKorrBeo < ε abgefragt. Ist diese kleiner als der Schwellenwert ε, ab dem erkannt werden kann, wie ein Moment vom Motor über die Kupplung an die Antriebsachse übertragen wird, erfolgt erneut eine Plausibilitätsprüfung mittels NMotorMess, d.h. der Ist-Motordrehzahl 112 gemäß Fig. 1. Ist diese NMotorMess stabil, wird die Drosselklappe gemäß ACC- oder CC-Vorgabe mit α = α ACC/CC mit Aktuator 14 geregelt. Wird in Raute 16 anhand der Plausibilitätsprüfung festgestellt, daß die Ist-Motordrehzahl NMotorMess 112 ansteigt, wird über Aktuator 12 die Drosselklappe geschlossen, so daß α_{Soll} = 0 ist.

Ist in Raute 15 der Betrag MKorrBeo < ε nicht bestätigt, wird in Raute 17 MKorrBeo > ε angenommen, d.h. ein Fahrzustand, bei dem das Fahrzeug angetrieben bzw. beschleunigt wird. Wird der Zustand MKorrBeo > ε bestätigt, wird die Drosselklappe gemäß ACC- oder CC-Vorgabe nach α = α_{ACC/CC} geregelt. Wird der Zustand MKorrBeo > ε nicht bestätigt, d.h. daß der Wert für das Antriebsmoment des Fahrzeugs MKorrBeo 114 kleiner oder gleich dem Schwellenwert ist, wird über den Aktuator 12 die Drosselklappe geschlossen, so daß α_{Soll} = 0 ist. Die Drosselklappe wird nur dann geschlossen, wenn die Abfragen in den drei Rauten 11,15,17 alle mit "nein" bestätigt wurden. Dann ist keine gültige Berechnung von MKorrBeo möglich (z.B. Ausfall des Motordrehzahlsensors) und die Drosselklappe muß geschlossen werden, da der Prozeß nicht mehr beobachtbar ist. Durch die vorgesehene Situationserkennung wird ein Fahrzeug mit herkömmlichem Schaltgetriebe und ACC- oder CC-Regelung ohne zusätzliche Sensorik mit einer Fahrzeuggetriebezustandserkennung versehen, die über eine Ermittlung des Antriebsmomentes des Fahrzeugs MKorrBeo 114 erkennt, ob ein Gang eingelegt ist oder nicht und so ein ungewolltes "Hochdrehen" des Motors bei nicht betätigter Kupplung und nicht eingelegtem Gang verhindert.

## Patentansprüche

1. Verfahren zum Ermitteln des Fahrzeugschaltgetriebezustands eines Fahrzeugs mit einer Geschwindigkeitsund/oder Abstandsregelanlage, mit den Schritten: modellbasiertes Ermitteln des Leerlaufverhaltens des Motors,
Vergleichen von Modellausgangswerten mit entsprechenden Meßwerten oder davon abgeleiteten Werten,
Ermitteln des Fahrzeugantriebsmomentes (MKorrBeo) nach Maßgabe des Vergleichs,
Vergleichen des Fahrzeugantriebsmoments mit einem vorgegebenen Schwellenwert (ε) oder Bewerten des Zustands des Fahrzeugantriebsmoments (MKorrBeo)
und
Ermitteln des Fahrzeugschaltgetriebezustandes nach Maßgabe des Vergleichs oder des bewerteten Zustands.

2. Verfahren nach Anspruch 1, **gekennzeichnet durch** das Ermitteln des Fahrzeugantriebsmoments mit den Schritten
Ermitteln der Ist-Motordrehzahl anhand gemessener Werte,
Ermitteln des Leerlaufmotormoments anhand gemessener Werte, Ermitteln einer Schätz-Motordrehzahl aus dem Leerlaufmotormoment, und
Ermitteln des Fahrzeugantriebsmoments nach Maßgabe der Ist- und der Schätzmotordrehzahl.

3. Verfahren nach Anspruch 2, **dadurch gekennzeichnet, daß** die Schätz-Motordrehzahl auch nach Maßgabe des Fahrzeugantriebsmomentes ermittelt wird.

4. Verfahren nach Anspruch 3, **dadurch gekennzeichnet, daß** der Schritt des Ermittelns der Schätz-Motordrehzahl aufweist
Ermitteln eines Motorschleppmoments
vorzeichenrichtiges Summieren von am Motor wirkenden Momenten, und danach
Kalibrieren, Verzögern und Integrieren.

5. Verfahren nach Anspruch 4, **dadurch gekennzeichnet, daß** der Schritt des Ermitteins der Schätz-Motordrehzahl eine weitere Verzögerung erster oder höherer Ordnung aufweist.

6. Verfahren nach einem der Ansprüche 2 bis 5, **dadurch gekennzeichnet, daß** das Fahrzeugantriebsmoment nach Maßgabe der Differenz zwischen der Ist- und der Schätz-Motorzahl ermittelt wird.

7. Verfahren nach Anspruch 4, **dadurch gekennzeichnet, daß** das Motorschleppmoment nach Maßgabe einer Motordrehzahl ermittelt wird.

8. Verfahren nach einem der Ansprüche 2 bis 7, **dadurch gekennzeichnet, daß** das Leerlaufmotormoment insbesondere nach Maßgabe des Drosselklappenwinkels Bezug nehmend auf eine Formel oder ein Kennfeld ermittelt wird.

9. Verfahren nach einem der Ansprüche 1 bis 8, **dadurch gekennzeichnet, daß** der ermittelte Fahrzeugschaltgetriebezustand einer Plausibilitätsüberprüfung, vorzugsweise mit der Motordrehzahl, unterzogenen wird.

10. Verfahren nach einem der Ansprüche 1 bis 9, **dadurch gekennzeichnet, daß** bei einem Fahrzeugantriebsmoment und einem Schwellenwert nach der Beziehung
MKorrBeo ≤ -ε
mit
MKorrBeo = Fahrzeugantriebsmoment
und -ε = Schwellenwert, ab dem erkannt werden kann, wie ein Moment vom Motor über die Kupplung an die Antriebsachse übertragen wird
und ansteigender Ist-Motordrehzahl NMotorMess der Drosselklappenwinkel α_{Soll} gegen 0 oder auf 0 bei eingeschalteter ACC- oder CC-Regelung gestellt wird.

11. Verfahren nach einem der Ansprüche 1 bis 9, **dadurch gekennzeichnet, daß** bei einem Fahrzeugantriebsmoment und einem Schwellenwert nach der Beziehung
|MKorrBeo| < ε
mit
|MKorrBeo| = Betrag des Fahrzeugantriebsmoments
und ε = Schwellenwert, ab dem erkannt werden kann, wie ein Moment vom Motor über die Kupplung an die Antriebsachse übertragen wird
und ansteigender oder sinkender Ist-Motordrehzahl NMotorMess der Drosselklappenwinkel α_{Soll} gegen 0 oder auf 0 bei eingeschalteter ACC- oder CC-Regelung gestellt wird.

12. Verfahren nach einem der Ansprüche 1 bis 9, **dadurch gekennzeichnet, daß** bei einem Fahrzeugantriebsmoment und einem Schwellenwert nach der Beziehung
MKorrBeo ≥ ε
mit
MKorrBeo = Fahrzeugantriebsmoment
und ε = Schwellenwert,
ab dem erkannt werden kann, wie ein Moment vom Motor über die Kupplung an die Antriebsachse übertragen wird
der Drosselklappenwinkel α_{Soll} = α_{ACC/CC} bei eingeschalteter ACC- oder CC-Regelung gestellt wird.

13. Vorrichtung zum Ermitteln des Fahrzeugschaltgetriebe-Zustandes eines Fahrzeuges mit Abstands- oder Geschwindigkeitsregelanlage mit
einem Modell des Leerlaufverhaltens des Motors,
einem Vergleicher für Modell-Ausgangswerte und entsprechende Meßwerte oder davon abgeleitete Werte,
mit einer Ermittlungseinrichtung zum Ermitteln des Fahrzeug-Antriebsmoments nach Maßgabe des Vergleichsergebnisses,
mit einer Bewertungs- und/oder Vergleichseinrichtung zum Vergleichen des Fahrzeugantriebsmomentes mit einem Schwellenwert oder zum Bewerten des Fahrzeugantriebsmomentes und einer Ermittlungseinrichtung zum Ermitteln des Fahrzeugschaltzustandes nach Maßgabe des Bewertungs- oder Vergleichsergebnisses.

14. Vorrichtung nach Anspruch 13, **gekennzeichnet durch** eine erste Ermittlungseinrichtung (101, 102) zum Ermitteln des Leerlaufmotormoments (MMotor),
eine zweite Ermittlungseinrichtung (103 - 108) zum Ermitteln einer Schätz-Motordrehzahl (NMotorBeo) aus dem Leerlaufmotormoment,
eine dritte Ermittlungseinrichtung (112) zum Ermitteln der Ist-Motordrehzahl (NMotorMess) anhand gemessener Werte,
eine vierte Ermittlungseinrichtung (109, 110, 114) zum Ermitteln des Fahrzeugantriebsmomentes (MMorrBeo) nach Maßgabe der Ist- und der Schätzmotordrehzahl und eine fünfte Ermittlungseinrichtung (10 - 17) zum Ermitteln des Fahrzeugschaltgetriebezustandes nach Maßgabe des Fahrzeugantriebsmomentes und eines Schwellenwertes.

## Claims

1. Method of determining the condition of a manually-shifted transmission of a vehicle with a speed and/or collision avoidance control system, comprising the following steps:
determining the idling performance of the engine based on a model,
comparing model output values with corresponding test values or values derived therefrom,
determining the vehicle drive torque (MCorrObserv) according to the comparison,
comparing the vehicle drive torque with a predetermined threshold value (ε) or evaluating the condition of the vehicle drive torque (MCorrObserv)
and
determining the condition of a manually-shifted vehicle transmission according to the comparison or the evaluated condition.

2. Method as claimed in claim 1,
**characterized by** the determination of the vehicle drive torque comprising the steps of
determining the actual engine speed by way of test values, determining the idle engine torque by way of test values,
determining an estimated engine speed from the idle engine torque, and
determining the vehicle drive torque according to the actual engine speed and the estimated engine speed.

3. Method as claimed in claim 2,
**characterized in that** the estimated engine speed is also determined according to the vehicle drive torque.

4. Method as claimed in claim 3,
**characterized in that** the step of determining the estimated engine speed includes
determining a residual engine torque
summing of torques acting on the engine with correct signs, and subsequently
calibrating, decelerating and integrating.

5. Method as claimed in claim 4,
**characterized in that** the step of determining the estimated engine speed includes a further deceleration of first and higher order.

6. Method as claimed in any one of claims 2 to 5,
**characterized in that** the vehicle drive torque is determined according to the difference between the actual engine speed and the estimated engine speed.

7. Method as claimed in claim 4,
**characterized in that** the residual engine torque is determined according to an engine speed.

8. Method as claimed in any one of claims 2 to 7,
**characterized in that** the idle engine torque is determined especially according to the throttle angle making reference to a formula or a characteristic diagram.

9. Method as claimed in any one of claims 1 to 8,
**characterized in that** the determined condition of a manually-shifted vehicle transmission is subjected to a plausibility check, preferably with the engine speed.

10. Method as claimed in any one of claims 1 to 9,
**characterized in that** in the presence of a vehicle drive torque and a threshold value according to the relation
MCorrObserv ≤ -ε
wherein MCorrObserv = vehicle drive torque
and -ε = threshold value starting from which it can be identified how a torque is transmitted from the engine via the clutch to the driving axle
and with a rising actual engine speed NEngineMeas, the throttle angle αₙₒₘᵢₙₐₗ is set toward zero or to zero, with the ACC or CC control activated.

11. Method as claimed in any one of claims 1 to 9,
**characterized in that** in the presence of a vehicle drive torque and a threshold value according to the relation
|MCorrObserv| < ε
wherein |MCorrObserv| = amount of the vehicle drive torque
and ε = threshold value starting from which it can be identified how a torque is transmitted from the engine via the clutch to the driving axle
and with a rising or declining actual engine speed NEngineMeas, the throttle angle αₙₒₘᵢₙₐₗ is set toward zero or to zero, with the ACC or CC control activated.

12. Method as claimed in any one of claims 1 to 9,
**characterized in that** in the presence of a vehicle drive torque and a threshold value according to the relation
MCorrObserv ≥ ε
wherein MCorrObserv = vehicle drive torque
and ε = threshold value starting from which it can be identified how a torque is transmitted from the engine via the clutch to the driving axle,
the throttle angle αₙₒₘᵢₙₐₗ = α_{ACC/CC} is set, with the ACC or CC control activated.

13. Device for determining the condition of a manually-shifted transmission of a vehicle with a collision avoidance or speed control system, comprising
a model of the idling performance of the engine,
a comparator for model output values and corresponding test values or values derived therefrom,
a determining device for determining the vehicle drive torque according to the comparison result,
an evaluating and/or comparing device for comparing the vehicle drive torque with a threshold value or for evaluating the vehicle drive torque and a determining device for determining the condition of a manually-shifted vehicle transmission according to the evaluation or comparison result.

14. Device as claimed in claim 13,
**characterized by**
a first determining device (101, 102) for determining the idle engine torque (MEngine),
a second determining device (103 - 108) for determining an estimated engine speed (NEngineObserv) from the idle engine torque,
a third determining device (112) for determining the actual vehicle speed (NEngineMeas) by way of test values,
a fourth determining device (109, 110, 114) for determining the vehicle drive torque (MCorrObserv) according to the actual engine speed and the estimated engine speed, and
a fifth determining device (10 - 17) for determining the condition of a manually-shifted vehicle transmission according to the vehicle drive torque and a threshold value.

## Revendications

1. Procédé pour obtenir l'état de la boîte de vitesses du véhicule
d'un véhicule comprenant une installation de régulation de la vitesse et/ou de la distance, présentant les phases :
obtention basée sur modèle du comportement de marche à vide du moteur,
comparaison de valeurs de sortie du modèle avec des valeurs mesurées correspondantes ou des valeurs qui en sont dérivées,
obtention du couple d'entraînement du véhicule (MKorrBeo) d'après la comparaison,
comparaison du couple d'entraînement du véhicule avec une valeur de seuil (ε) prédéterminée ou évaluation de l'état du couple d'entraînement du véhicule (MKorrBeo) et
obtention de l'état de la boîte de vitesses du véhicule d'après la comparaison ou d'après l'état évalué.

2. Procédé selon la revendication 1, **caractérisé par** l'obtention
du couple d'entraînement du véhicule comprenant les phases :
obtention de la vitesse de rotation réelle du moteur sur la base de valeurs mesurées,
obtention du couple de marche à vide du moteur sur la base de valeurs mesurées,
obtention d'une vitesse de rotation estimée du moteur à partir du couple de marche à vide du moteur et,
obtention du couple d'entraînement du véhicule d'après les vitesses de rotation du moteur, réelle et estimée.

3. Procédé selon la revendication 2, **caractérisé en ce que** la
vitesse de rotation estimée du moteur est aussi obtenue d'après le couple d'entraînement du véhicule.

4. Procédé selon la revendication 3, **caractérisé en ce que** la
phase de l'obtention de la vitesse de rotation estimée du moteur comprend
obtention d'un couple de traînée du moteur
addition des valeurs de couples agissant au niveau du moteur en tenant compte des signes et, ensuite
calibrage, temporisation et intégration.

5. Procédé selon la revendication 4, **caractérisé en ce que** la
phase de l'obtention de la vitesse de rotation estimée du moteur comprend une temporisation additionnelle du premier ordre ou d'un ordre supérieur.

6. Procédé selon une des revendications 2 à 5, **caractérisé en ce**
**que** le couple d'entraînement du véhicule est obtenu d'après la différence entre les vitesses de rotation du moteur, réelle et estimée.

7. Procédé selon la revendication 4, **caractérisé en ce que** le
couple de traînée du moteur est obtenu d'après une vitesse de rotation du moteur.

8. Procédé selon une des revendications 2 à 7, **caractérisé en ce**
**que** le couple de marche à vide du moteur est obtenu en particulier d'après l'angle du volet de réglage en se référant à une formule ou à un diagramme.

9. Procédé selon une des revendications 1 à 8, **caractérisé en ce**
**que** l'état obtenu de la boîte de vitesses du véhicule est soumis à un contrôle de plausibilité, de préférence avec la vitesse de rotation du moteur.

10. Procédé selon une des revendications 1 à 9, **caractérisé en ce**
**qu'**en présence d'un couple d'entraînement du véhicule et d'une valeur de seuil vérifient la relation
MKorrBeo ≤ -ε
où
MKorrBeo = couple d'entraînement du véhicule
et -ε = valeur de seuil à partir de laquelle on peut détecter la mesure dans laquelle un couple est transmis du moteur à l'essieu moteur par l'intermédiaire de l'embrayage
et, en présence d'une vitesse de rotation réelle du moteur NmotorMess croissante, l'angle du volet de réglage α_{Soll} est réglé vers 0 ou sur 0 lorsque la régulation ACC ou CC est mise en action.

11. Procédé selon une des revendications 1 à 9, **caractérisé en ce**
**qu'**en présence d'un couple d'entraînement du véhicule et d'une valeur de seuil vérifiant la relation
|MKorrBeo| < ε
où
|MKorrBeo| = valeur absolue du couple d'entraînement du véhicule
et ε = valeur de seuil à partir de laquelle on peut détecter la mesure dans laquelle un couple est transmis du moteur à l'essieu moteur par l'intermédiaire de l'embrayage
et, en présence d'une vitesse de rotation réelle du moteur NmotorMess croissante ou décroissante, l'angle du volet de réglage α_{Soll} est réglé vers 0 ou sur 0 lorsque la régulation ACC ou CC est mise en action.

12. Procédé selon une des revendications 1 à 9, **caractérisé en ce**
**qu'**en présence d'un couple d'entraînement du véhicule et d'une valeur de seuil vérifiant la relation
MKorrBeo ≥ ε
où
MKorrBeo = couple d'entraînement du véhicule
et ε = valeur de seuil à partir de laquelle on peut détecter la mesure dans laquelle un couple est transmis du moteur à l'essieu moteur par l'intermédiaire de l'embrayage l'angle du volet de réglage α_{Soll} est réglé sur = α_{ACC/CC} lorsque la régulation ACC ou CC est mise en action.

13. Dispositif pour obtenir l'état de la boîte de vitesses de véhicule d'un véhicule équipé d'une installation de régulation de distance ou de vitesse comprenant
un modèle du comportement de marche à vide du moteur,
un comparateur pour des valeurs de sortie du modèle et des valeurs mesurées correspondantes ou des valeurs qui en sont dérivées,
un dispositif d'obtention destiné à obtenir le couple d'entraînement du véhicule d'après le résultat de la comparaison,
un dispositif d'évaluation et/ou de comparaison destiné à comparer le couple d'entraînement du véhicule à une valeur de seuil ou à évaluer le couple d'entraînement du véhicule et un dispositif d'obtention destiné à obtenir l'état de la boîte de vitesses du véhicule d'après le résultat de l'évaluation ou de la comparaison.

14. Dispositif selon la revendication 13, **caractérisé par** un premier dispositif d'obtention (101, 102) destiné à obtenir le couple de ralenti du moteur (Mmotor),
un deuxième dispositif d'obtention (103-108) destiné à obtenir une vitesse de rotation estimée du moteur (NmotorBeo) à partir du couple de marche à vide du moteur,
un troisième dispositif d'obtention (112) destiné à obtenir la vitesse de rotation réelle du moteur (NmotorMess) sur la base de valeurs mesurées,
un quatrième dispositif d'obtention (109, 110, 114) destiné à obtenir le couple d'entraînement du véhicule (MKorrBeo) d'après les vitesses de rotation du moteur, réelle et estimée et un cinquième dispositif d'obtention (10-17) destiné à obtenir l'état de la boîte de vitesses du véhicule d'après le couple d'entraînement du véhicule et une valeur de seuil.
